# EUROPÄISCHE PATENTANMELDUNG

(11) **EP 2 037 553 A1**
(43) Veröffentlichungstag der Anmeldung: **18.03.2009**
(21) Anmeldenummer: 07017740.7
(22) Anmeldetag: 11.09.2007
(51) Int. Cl.: H02J 1/10, H02J 7/35

(54) **Generatoranschluss einer Photovoltaikanlage**

(71) Anmelder: HaWi Energietechnik AG, 84307 Eggenfelden (DE)
(72) Erfinder: Wimmer, Hans, 84329 Rogglfing (DE)
(74) Vertreter: Rothkopf, Ferdinand

(57) **Zusammenfassung**

Bei einem Generatoranschluss (10) einer Photovoltaikanlage mit mindestens zwei Zuleitungsklemmen (14), mindestens zwei Rückstromdioden (22) und einer Ableitungsklemme (30), sind die Zuleitungsklemmen (14), die Rückstromdioden (22) und die Ableitungsklemme (30) auf einer Leiterplatte (12) angeordnet, jede Zuleitungsklemme (14) jeweils mit einer zugehörigen Rückstromdiode (22) elektrisch leitend verbunden und die Rückstromdioden (22) mittels einer auf der Leiterplatte (12) ausgebildeten Sammelleitung (28) mit der Ableitungsklemme (30) elektrisch verbunden.

## Beschreibung

### Hintergrund der Erfindung

Die Erfindung betrifft einen Generatoranschluss einer Photovoltaikanlage.

Photovoltaische Flächenelemente bzw. photovoltaische Module von Photovoltaikanlagen liefern den von ihnen erzeugten Strom über jeweilige so genannte Strangleitungen. Die Strangleitungen der einzelnen photovoltaischen Flächenelemente werden bei Standardanlagen, also Anlagen sowohl kleiner als auch großer Leistung gewöhnlich mittels so genannter Generatoranschlüsse bzw. Generatoranschlusskästen zu einer Ableitung zusammengeführt. An die Ableitung schließt sich ein Photovoltaik-Wechselrichter an. Der Photovoltaik-Wechselrichter speist den von der Photovoltaikanlage erzeugten Strom in ein Stromnetz, beispielsweise das öffentliche Stromnetz ein.

Die Generatoranschlüsse dienen damit als Einrichtung zum Sammeln der einzelnen Strangleitungen und wirken einerseits als Schutz für den Photovoltaik-Wechselrichter und andererseits für die photovoltaischen Flächenelemente (DC- bzw. Gleichstrom-seitig) vor Überstromeinkopplung über Solaranschlussleitungen. Ferner bilden sie eine Gleichstrom-Trennstelle zwischen dem Photovoltaik-Wechselrichter und den photovoltaischen Flächenelementen. Diese Funktion ist gemäß IEC 60364-7-712 zwingend erforderlich. Im Bedarfsfall dienen die Generatoranschlüsse auch zur Aufnahme von Strangdioden oder Strangsicherungen.

Die Generatoranschlüsse heutiger Photovoltaikanlagen stellen daher komplexe Schaltungsanordnungen mit einer Vielzahl Funktionen dar, welche üblicherweise je nach Art und Leistung der zugehörigen Photovoltaikanlage durch Verdrahtung einzelner Bauelemente miteinander realisiert werden. Die Bauelemente sind dabei in zugehörigen Schaltkästen einzelne zu befestigen und zu verdrahten, was nur von Fachleuten erledigt werden kann. Das Verdrahten ist dabei nicht nur teuer sondern birgt auch ein hohes Fehlerrisiko.

Es ergibt sich ferner das Problem, dass, wenn ein Funktionsfehler eines einzelnen photovoltaischen Flächenelements angezeigt wird, es oft nicht klar ist, ob das photoelektrische Flächenelement tatsächlich Ursache für den Funktionsfehler ist oder ob stattdessen der Generatoranschluss mit seinen Bauelementen fehlerhaft ist. Um sich hierbei Klarheit zu verschaffen, ist in der Regel eine aufwändige Fehleranalyse notwendig.

### Zugrundeliegende Aufgabe

Es ist eine Aufgabe der Erfindung, die vorgenannten Probleme zu lösen und insbesondere einen Generatoranschluss einer Photovoltaikanlage zu schaffen, der kostengünstig ist und ferner ggf. eine einfache Fehlersuche ermöglicht.

### Erfindungsgemäße Lösung

Diese Aufgabe ist erfindungsgemäß mit einem Generatoranschluss einer Photovoltaikanlage gemäß Anspruch 1 gelöst. Vorteilhafte Weiterbildungen der Erfindung sind in den abhängigen Ansprüchen beschrieben.

Erfindungsgemäß ist ein Generatoranschluss einer Photovoltaikanlage mit mindestens zwei Zuleitungsklemmen, mindestens zwei Rückstromdioden und einer Ableitungsklemme geschaffen, bei dem die Zuleitungsklemmen, die Rückstromdioden und die Ableitungsklemme auf einer Leiterplatte angeordnet, jede Zuleitungsklemme jeweils mit einer zugehörigen Rückstromdiode elektrisch leitend verbunden und die Rückstromdioden mittels einer auf der Leiterplatte ausgebildeten Sammelleitung mit der Ableitungsklemme elektrisch verbunden sind.

Vorteilhaft ist die Leiterplatte eine Leiterplatte mit darauf bestückten Zuleitungsklemmen, Rückstromdioden und Ableitungsklemme.

Ferner ist bevorzugt die Leiterplatte eine Leiterplatte mit darauf aufgelöteten Rückstromdioden.

Erfindungsgemäß bevorzugt ist ferner auch, dass elektrisch leitend zwischen mindestens einer der Zuleitungsklemmen und der zugehörigen Rückstromdiode eine Messstelle angeordnet ist.

Die bei dem erfindungsgemäßen Generatoranschluss einer Photovoltaikanlage vorgesehenen Bauelemente Zuleitungsklemmen, Rückstromdioden und Ableitungsklemme sind vorteilhaft gemäß der erfindungsgemäßen Lösung als oberflächenmontierte Bauelemente ausgestaltet, welche auf einer Leiterplatte angeordnet und auf diese Weise zu einer Baugruppe kombiniert sind.

Auf der derartigen Leiterplatte ist ferner auch eine Sammelleitung ausgebildet, welche die elektrische Verbindung zwischen den Rückstromdioden und der Ableitungsklemme herstellt.

Die derartige erfindungsgemäße Baugruppe birgt nicht nur den Vorteil, dass sie als solche kleiner als bisher bekannte (aus einzelnen Bauelementen verdrahtete) Baugruppen ist, sondern ferner aufgrund der Möglichkeit der Vorfertigung der erfindungsgemäßen Baugruppe eine geprüfte Bauform mit weniger Fehlerhäufigkeit und insgesamt höherer Qualität darstellt.

Die erfindungsgemäß vorteilhaft vorgesehenen Messstellen ermöglichen eine weiter vereinfachte Fehleranalyse und eine auf Wunsch einfache Auswertung der von den photovoltaischen Flächenelementen gelieferten Einzelströme.

### Kurzbeschreibung der Zeichnungen

Nachfolgend wird ein Ausführungsbeispiel eines erfindungsgemäßen Generatoranschlusses einer Photovoltaikanlage anhand der beigefügten schematischen Zeichnungen näher erläutert.

Es zeigt die Fig. eine perspektivische Ansicht eines erfindungsgemäßen Generatoranschlusses einer Photovoltaikanlage.

### Detaillierte Beschreibung des Ausführungsbeispiels

In der Fig. ist ein Generatoranschluss 10 einer weiter nicht veranschaulichten Photovoltaikanlage dargestellt, bei dem auf der Oberseite einer plattenförmigen Leiterplatte 12 sechs Zuleitungsklemmen 14 ortsfest angebracht sind. Die Zuleitungsklemmen 14 sind dabei einzeln scheibenförmig gestaltet und derart mit ihren großflächigen Seiten nebeneinander und aneinander anliegend angeordnet, dass eine Reihung entsteht. An jede der Zuleitungsklemmen 14 ist eine einzelne Strangleitung 16 elektrisch leitend angeschlossen, welche zu einem zugehörigen (vorliegend nicht dargestellten) photovoltaischen Flächenelement der zugehörigen Photovoltaikanlage führt. An photovoltaischen Flächenelement wird eingestrahlte Sonnenenergie in elektrische Energie in Form einer elektrischen Spannung bzw. eines elektrischen Stroms gewandelt.

Auf der Oberseite der Leiterplatte 12 sind unmittelbar hinter jeder der Zuleitungsklemmen 14 zugehörige Messstellen 18 mit integrierter Trennstelle 20 zur möglichen Trennung der elektrischen Verbindung zu Messzwecken angeordnet. Die Messstellen 18 sind jeweils einzeln elektrisch leitend über eine zugehörige, an der Unterseite der Leiterplatte 12 ausgebildete (und in der dargestellten perspektivischen Ansicht nicht sichtbare) Leiterbahn mit der zugehörigen Zuleitungsklemme 14 verbunden.

Hinter jeder der Messstellen 18 ist an der Oberseite der Leiterplatte 12 jeweils eine zugehörige Rückstromdiode 22 angeordnet. Die Rückstromdioden 22 weisen je eine erste, eingangsseitige Kontaktstelle 24 und eine zweite, ausgangsseitige Kontaktstelle 26 auf, von denen jeweils die erste Kontaktstelle 24 einzeln elektrisch leitend über eine zugehörige, ebenfalls an der Unterseite der Leiterplatte 12 ausgebildete (und in der dargestellten perspektivischen Ansicht nicht sichtbare) Leiterbahn mit der zugehörigen Messstelle 18 verbunden ist.

Die zweiten Kontaktstellen 26 jeder der Rückstromdioden 22 sind jeweils mit einer ebenfalls an der Unterseite der Leiterplatte 12 ausgebildet (und in der dargestellten perspektivischen Ansicht nur gestichelt dargestellten) Leiterbahn verbunden, welche als Sammelleitung 28 elektrisch leitend mit einer Ableitungsklemme 30 verbunden ist.

Die Ableitungsklemme 30 ist im vorderen Bereich der Leiterplatte 12 an deren Oberseite neben der Reihe von Zuleitungsklemmen 14 angeordnet. An der Ableitungsklemme 30 ist eine Ableitung 32 elektrisch leitend angeschlossen, welche zu einem (nicht dargestellten) Photovoltaik-Wechselrichter der zugehörigen Photovoltaikanlage führt.

Die Zuleitungsklemmen 14, die Messstellen 18 mit integrierter Trennstelle 20, die Rückstromdioden 22 und die Ableitungsklemme 30 sind sämtlich als Bauelemente auf der Leiterplatte 12 aufgelötet. Die elektrischen Verbindungen zu den genannten Leiterbahnen, insbesondere der Sammelleitung 28, sind dabei ebenfalls mittels Löten hergestellt. Ferner ist an der Oberseite der Leiterplatte 12 eine die Reihe von Rückstromdioden 22 überdeckende Schutzplatte 34 aus durchsichtigem Kunststoff auf Abstandhaltern 36 ortsfest angebracht.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Generatoranschluss
- 12: Leiterplatte
- 14: Zuleitungsklemme
- 16: Stangleitung
- 18: Messstelle
- 20: Trennstelle
- 22: Rückstromdiode
- 24: Kontaktstelle
- 26: Kontaktstelle
- 28: Sammelleitung
- 30: Ableitungsklemme
- 32: Ableitung
- 34: Schutzplatte
- 36: Abstandshalter

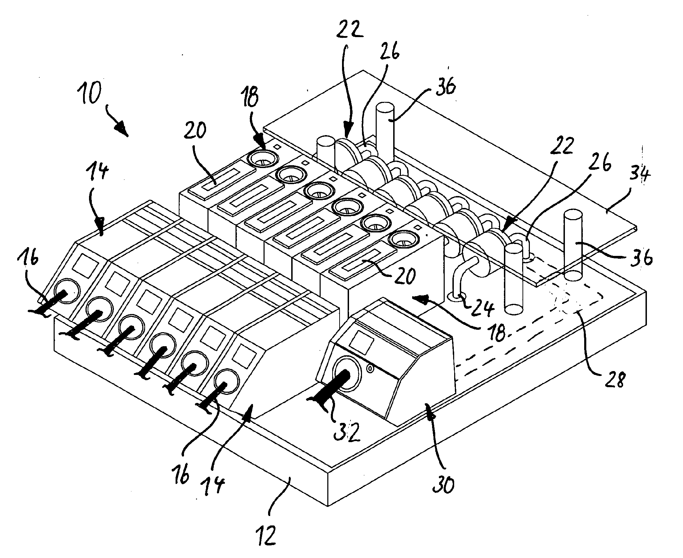

## Patentansprüche

1. Generatoranschluss (10) einer Photovoltaikanlage mit mindestens zwei Zuleitungsklemmen (14), mindestens zwei Rückstromdioden (22) und einer Ableitungsklemme (30), bei dem die Zuleitungsklemmen (14), die Rückstromdioden (22) und die Ableitungsklemme (30) auf einer Leiterplatte (12) angeordnet, jede Zuleitungsklemme (14) jeweils mit einer zugehörigen Rückstromdiode (22) elektrisch leitend verbunden und die Rückstromdioden (22) mittels einer auf der Leiterplatte (12) ausgebildeten Sammelleitung (28) mit der Ableitungsklemme (30) elektrisch verbunden sind.

2. Generatoranschluss einer Photovoltaikanlage nach Anspruch 1, **dadurch gekennzeichnet, dass** die Leiterplatte (12) eine Leiterplatte mit darauf bestückten Zuleitungsklemmen (14) und Ableitungsklemme (30) ist.

3. Generatoranschluss einer Photovoltaikanlage nach Anspruch 1 oder 2, **dadurch gekennzeichnet, dass** die Leiterplatte (12) eine Leiterplatte mit darauf aufgelöteten Rückstromdioden (22) ist.

4. Generatoranschluss einer Photovoltaikanlage nach einem der Ansprüche 1 bis 3,
**dadurch gekennzeichnet, dass** elektrisch leitend zwischen mindestens einer der Zuleitungsklemmen (14) und der zugehörigen Rückstromdiode (22) eine Messstelle (18) angeordnet ist.
